# EUROPEAN PATENT SPECIFICATION

(11) **EP 2 719 609 B1**
(45) Date of publication and mention of the grant of the patent: **04.11.2015**
(21) Application number: 13160445.6
(22) Date of filing: 21.03.2013
(51) Int. Cl.: B62J 6/04, B62J 15/00, B62K 11/04

(54) **Motorcycle**
Motorrad
Motocyclette

(30) Priority: 11.10.2012 JP 2012226282
(43) Date of publication of application: 16.04.2014
(73) Proprietor: Yamaha Hatsudoki Kabushiki Kaisha, Iwata-shi, Shizuoka 438-8501 (JP)
(72) Inventor: Fukushima, Takaaki, Iwata-shi, Shizuoka 438-8501 (JP); Uchisawa, Akinori, Iwata-shi, Shizuoka 438-8501 (JP); Hatano, Soichiro, Iwata-shi, Shizuoka 438-8501 (JP); Okamoto, Yasuo, Iwata-shi, Shizuoka 438-8501 (JP)
(74) Representative: Grünecker Patent- und Rechtsanwälte PartG mbB

(56) References cited:
- JP-A- H07 288 007
- JP-A- 2009 208 774
- JP-A- 2011 020 526

## Description

The present invention relates to a motorcycle according to the preamble of independent claim 1. Such a motorcycle can be taken from the prior art document JP 2009/208774 A. Said prior art discloses an arrangement having a fender plate and a pair of brackets protruding therefrom. A tail light housing has a pair of stays extending forward from both ends thereof. The pair of stays are attached to the pair of brackets respectively by bolts. The tail light housing further has a positioning pin protruding forward from the center thereof in the vehicle width direction. The positioning pin is inserted into a positioning hole provided on the fender plate via a grommet. The fender plate has a plate member into which the positioning hole is defined. The plate member extends upward from the fender plate, and extends in the vehicle width direction. The upper end of the plate member is positioned higher than the upper end of a cross member.

The prior art document JP H07-288007A, discloses a motorcycle that includes a pair of right and left seat rails, a pair of brackets respectively fixed on the upper surfaces of the rear ends of the pair of seat rails, and a cross plate that couples the pair of brackets. A pair of brackets are provided on the lower surfaces of the rear ends of the pair of seat rails. A rear fender is fixed to the brackets via bolts. The pair of right and left seat rails are coupled by a cross member. The rear fender is fixed to the cross member via a bolt. A mounting bracket is raised from the upper surface of the rear fender at the front end thereof. A tail lamp is mounted on the mounting bracket. The mounting bracket extends in the vehicle width direction, and the upper end of the mounting bracket is positioned higher than the cross member.

JP 62-76784 U discloses a bulb mounting structure for a motorcycle. The bulb mounting structure includes two plate-like ribs. Each rib extends upward from a rear fender. A taillight is supported by the two ribs. A length of each rib in a front/rear direction is greater than a length of the rib in a vehicle width direction (right/left direction).

The ribs according to JP 62-76784 U are longer in the front/rear direction than in the vehicle width direction and thus lack in compactness in the front/rear direction. In a case where a storage box or a fuel tank is disposed in front of the taillight, space must be secured for the storage box positioned in front of the taillight or space must be secured for the fuel tank positioned in front of the taillight. Despite this, the length of each rib in the front/rear direction is greater than the length of the rib in the vehicle width direction. The lack of compactness in the front/rear direction is thus made apparent, therefore.

Also, the rear fender according to JP 62-76784 U includes a first fender portion disposed above a rear wheel and a second fender portion extending downward from a rear end portion of the first fender portion to behind the rear wheel. The second fender portion is cantilevered and the second fender portion thus vibrates when, for example, the motorcycle rides over an irregularity on a road or when mud, water, or stone kicked up by the rear wheel hits the second fender portion.

Vibrations of the rear fender are transmitted to the taillight via the ribs. Therefore, when a taillight mounting member, such as the rib, extends from the rear fender, the vibrations transmitted from the rear fender must be taken into consideration.

Further, the second fender portion normally extends rearward and downward and a portion connecting the first fender portion and the second fender portion is elongate in the vehicle width direction. The second fender portion thus vibrates more readily in the front/rear direction than in the vehicle width direction. Front/rear direction vibrations transmitted from the second fender portion to the taillight must thus be taken into consideration in particular.

With JP 62-76784 U, the length of each rib in the front/rear direction is greater than the length of the rib in the vehicle width direction. Therefore, when the front/rear direction vibrations are transmitted from the second fender portion to the ribs, the ribs are unlikely to deflect in the front/rear deflection and consequently, the front/rear direction vibrations transmitted from the second fender portion to the ribs are transmitted to the taillight directly, that is, with hardly any attenuation. Durability of the taillight may thus be lowered.

It is an object of the of the present invention to provide a motorcycle having high reliability. According to the present invention said object is solved by a motorcycle having the features of independent claim 1. Preferred embodiments are laid down in the dependent claims. Accordingly, it is provided a motorcycle including a pair of seat frames, a rear wheel, a rear fender, a cross member, a mounting member and a taillight. The pair of seat frames extend in a front/rear direction and are spaced apart from each other by an interval in a vehicle width direction (width direction of the motorcycle). The rear wheel is disposed below the pair of seat frames in a side view. The rear fender includes a first fender portion disposed above the rear wheel and a second fender portion extending downward from a rear end portion of the first fender portion to behind the rear wheel. The first fender portion is mounted on the pair of seat frames. The cross member is disposed above the rear fender and couples the pair of seat frames. The mounting member extends higher than the cross member from the rear fender. A length of the mounting member in the vehicle width direction is greater than a length of the mounting member in the front/rear direction. The taillight is disposed above the rear fender. The taillight is mounted on the mounting member.

With this arrangement, the mounting member on which the taillight is mounted extends upward from the rear fender. The rear fender includes the first fender portion coupled to the pair of seat frames and the second fender portion extending downward from the rear end portion of the first fender portion. The second fender portion is cantilevered by the first fender portion fixed to the seat frames, and thus a rear portion (the second fender portion) of the rear fender vibrates readily in the front/rear direction. Vibrations of the rear fender are transmitted to the mounting member. The mounting member deflects readily in the front/rear direction because the length of the mounting member in the front/rear direction is less than the length of the mounting member in the vehicle width direction. The mounting member can thus absorb the front/rear direction vibrations transmitted from the rear fender. The mounting member can thus reduce the front/rear direction vibrations transmitted to the taillight and can improve durability, such as light life, etc., of the taillight. Further, the mounting member is compact in the front/rear direction because the length of the mounting member in the front/rear direction is less than the length of the mounting member in the vehicle width direction. A rear portion (vehicle rear portion) of the motorcycle can thus be made compact.

In a preferred embodiment, the first fender portion may extend rearward and upward. In this case, the mounting member may be a member that extends upward from the first fender portion at a position further to the front and lower than an upper end of the first fender portion and is integral to the first fender portion.

In a case where the mounting member is not integral to the rear fender, a mounting portion for mounting a lower portion of the mounting member onto the rear fender must be provided at the lower portion of the mounting member. In this case, the lower portion of the mounting member may become large in an up/down direction and/or the front/rear direction. When the lower portion of the mounting member becomes large, the mounting member may not deflect readily in the front/rear direction or the vehicle rear portion that includes the rear cover and the taillight may become large. With the present arrangement, the mounting member is integral to the first fender portion and there is no need to provide the mounting portion for mounting the lower portion of the mounting member onto the rear fender. The abovementioned problem can thus be prevented from occurring.

In a preferred embodiment, the mounting member may include a vertical portion extending in a vertical direction.

A lower end portion of the mounting member is supported by the rear fender and the mounting member is cantilevered by the rear fender. At least a portion of the mounting member extends in the vertical direction. That is, at least a portion of the mounting member extends along a vertical plane. The mounting member is thus made long in the up/down direction. The mounting member is thereby made to deflect even more readily in the front/rear direction and the mounting member is made compact in the front/rear direction.

In a preferred embodiment, a portion of the mounting member on which the taillight is mounted may be disposed at the same position as the lower end portion of the mounting member in regard to a vehicle front/rear direction.

With this arrangement, the portion of the mounting member on which the taillight is mounted is disposed at the same position as the lower end portion of the mounting member in regard to the vehicle front/rear direction, and thus the length of the mounting member in the front/rear direction can be reduced more than in a case where this portion is disposed further to the front or rear than the lower end portion of the mounting member. The vehicle rear portion can thereby be made compact in the front/rear direction.

In a preferred embodiment, the mounting member may be coupled to the cross member.

With this arrangement, the mounting member is coupled to the cross member and thus the vibrations transmitted from the rear fender to the mounting member are absorbed by the mounting member. The front/rear direction vibrations transmitted to the taillight can thus be reduced. The durability of the taillight can thereby be improved.

In a preferred embodiment, the taillight may be mounted on the mounting member at a position higher than a coupling position of the mounting member and the cross member.

With this arrangement, the mounting position of the taillight with respect to the mounting member is set higher than the coupling position of the mounting member and the cross member. Therefore, when the taillight is being mounted onto the mounting member, a bolt or other fastening member that couples the mounting member to the cross member is unlikely to be an obstruction and the taillight can be mounted easily onto mounting member. Further, a distance from the lower end portion of the mounting member to the mounting position of the taillight is made long and the front/rear direction vibrations transmitted from the mounting member to the taillight can thus be reduced further.

In a preferred embodiment, the taillight may include a light mounting shaft inserted into a light mounting hole provided in the mounting member.

With this arrangement, the motorcycle is provided with an insertion type mounting structure for mounting the taillight onto the mounting member. That is, the taillight can be mounted onto the mounting member by a simple process of inserting the light mounting shaft of the taillight into the light mounting hole provided in the mounting member. The taillight can thus be mounted easily onto the mounting member.

In a preferred embodiment, the motorcycle may further include a resilient bushing interposed between an outer peripheral surface of the light mounting shaft and an inner peripheral surface of the light mounting hole.

With this arrangement, the light mounting shaft of the taillight is supported by the mounting member via the resilient bushing. The vibrations of the mounting member are absorbed by elastic deformation of the resilient bushing. The vibrations transmitted from the mounting member to the taillight can thus be reduced further. The durability of the taillight can thereby be improved further.

In a preferred embodiment, the motorcycle may further include a rear cover disposed at sides of and above the pair of seat frames. The rear cover may include a supporting portion supporting the taillight. The supporting portion may be disposed further to the rear than the mounting member and higher than the mounting member and may support a rear end portion of an upper portion of the taillight.

With this arrangement, the taillight is improved in stability because the taillight is supported by the supporting portion of the rear cover. The vibrations of the taillight can thus be reduced. The durability of the taillight can thereby be improved further.

In the present invention, the mounting member includes a pair of light mounting portions that are spaced apart from each other by an interval in the vehicle width direction and on which the taillight is mounted.

With this arrangement, the taillight is mounted on the pair of light mounting portions of the mounting member. That is, the taillight is mounted on the mounting member at a plurality of positions. The stability of the taillight is thus improved. The pair of light mounting portions are spaced apart from each other by an interval in the vehicle width direction (right/left direction) and thus the taillight is mounted on the mounting member at a plurality of positions that are separated in the right/left direction. The taillight is thus restrained in the right/left direction and movement of the taillight in the right/left direction is restricted. The stability of the taillight is thereby improved.

In a preferred embodiment, the motorcycle may further include a coupling member that couples the pair of light mounting portions.

With this arrangement, one of the light mounting portions is coupled to the other light mounting portion by the coupling member. Vibrations of each light mounting portion in the front/rear direction are thus reduced. The vibrations transmitted from the mounting member to the taillight are thus reduced and the durability of the taillight is improved further.

In a preferred embodiment, at least a portion of the mounting member may be disposed further to the front than rear ends of the pair of seat frames.

With this arrangement, an entirety or a portion of the mounting member is disposed further to the front than the rear ends of the pair of seat frames. A total length (length in the front/rear direction) of the motorcycle is thus reduced in comparison to a case where at least a portion of the mounting member is disposed further to the rear than the rear ends of the pair of seat frames. The motorcycle can thus be improved in compactness.

In a preferred embodiment, the rear fender may further include a third fender portion extending from a side end portion of the first fender portion to a side end portion of the second fender portion.

With this arrangement, the rear fender is improved in rigidity and vibrations of the rear fender itself are thus suppressed. Specifically, vibrations of the second fender portion in the front/rear direction are suppressed. The front/rear direction vibrations transmitted from the mounting member to the taillight are thus reduced and the durability of the taillight is improved further.

In a preferred embodiment, the motorcycle may further include a seat capable of opening and closing and disposed above the seat frames, and a seat locking apparatus that locks the seat to the seat frames. The seat locking apparatus may include a locking member that moves together with the seat. In this case, the locking member may overlap with the mounting member in a side view when the seat is locked to the seat frames.

With this arrangement, the seat that is capable of opening and closing with respect to the seat frames is locked to the seat frames by a locking mechanism. The locking mechanism includes the locking member that moves together with the seat. When the seat is locked to the seat frames, the locking member overlaps with the mounting member in a side view. Heights of the locking member and the mounting member in the state where the seat is closed is thus reduced. A height of the vehicle rear portion is thereby reduced and compactness of the motorcycle is achieved. Further, the locking member overlaps with the mounting member in a side view and thus lengths in the front/rear direction of the locking member and mounting member are shortened. The vehicle rear portion can thus be reduced in size in the front/rear direction.

Other elements, features, steps, characteristics and advantages of the present teaching will become more apparent from the following detailed description of the preferred embodiments with reference to the attached drawings.

### BRIEF DESCRIPTION OF THE DRAWINGS

FIG. 1 is a schematic left side view of a motorcycle according to a preferred embodiment.
FIG. 2 is a rear view of the motorcycle according to the preferred embodiment.
FIG. 3 is a schematic plan view of a storage box, a fuel tank, and a taillight.
FIG. 4 is a schematic plan view of surroundings of the taillight.
FIG. 5 is a schematic perspective view of surroundings of the taillight.
FIG. 6 is a schematic exploded perspective view of a state where the taillight has been removed.
FIG. 7 is a schematic side view of surroundings of the taillight.
FIG. 8 is a partial sectional view of a state where the taillight is supported by a vehicle body cover.
FIG. 9 is a rear view of a mounting member and a coupling member.
FIG. 10 is a perspective view of a rear fender as viewed from obliquely upward to the left and rear.
FIG. 11 is a left side view of the rear fender.
FIG. 12 is a plan view of the rear fender.
FIG. 13 is a partially enlarged view of FIG. 12.
FIG. 14 is a rear view of a mounting member and a coupling member according to another preferred embodiment.

### DETAILED DESCRIPTION OF THE PREFERRED EMBODIMENTS

Respective directions of front/rear, up/down, and right/left in the following description are based on a reference attitude corresponding to a state where a motorcycle 1 is travelling straight on a horizontal plane and on a viewpoint of a driver when the driver is facing forward. The right/left direction corresponds to a vehicle width direction (width direction of the motorcycle).

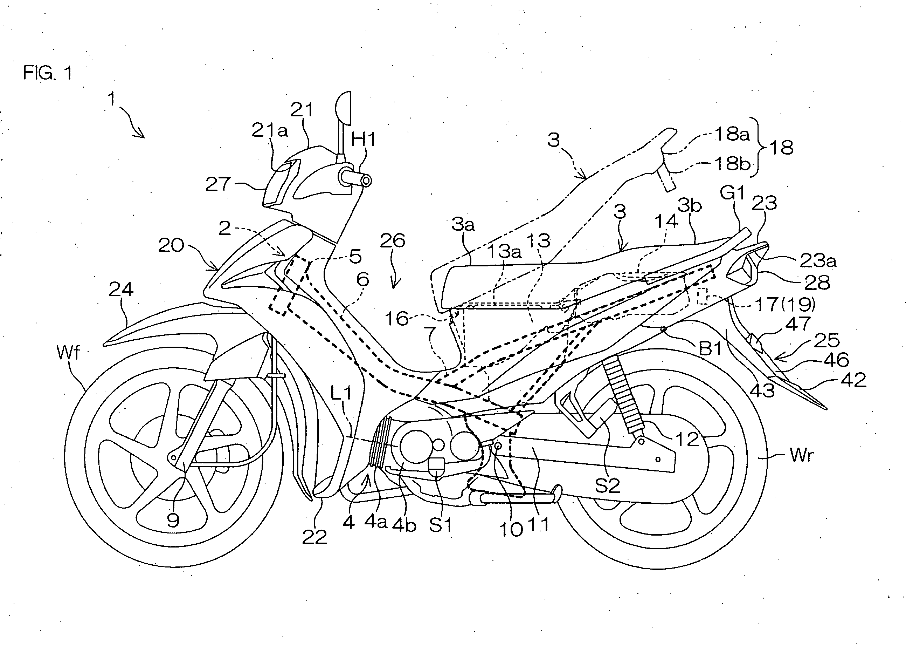

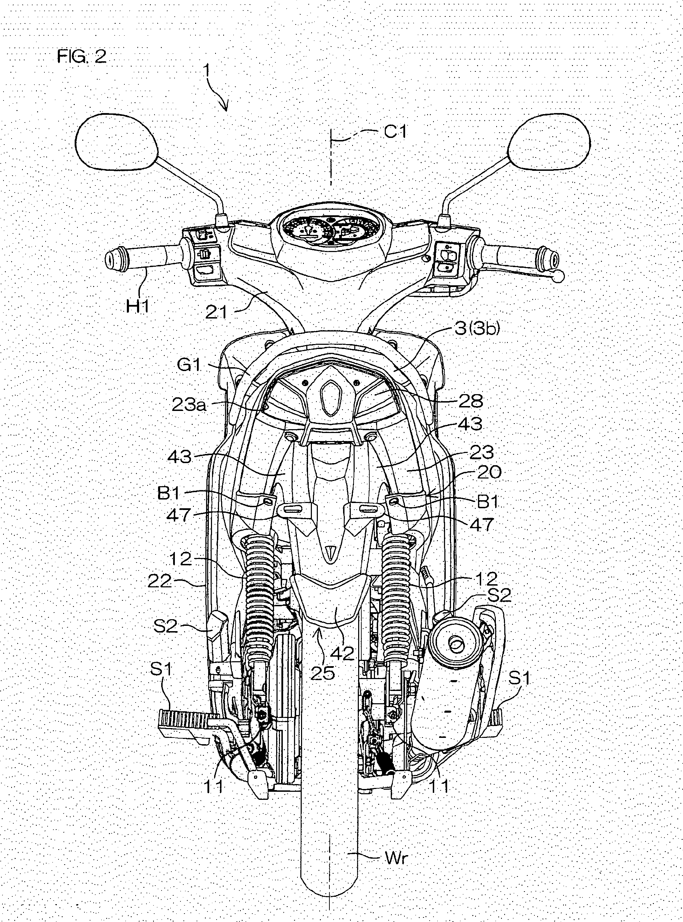

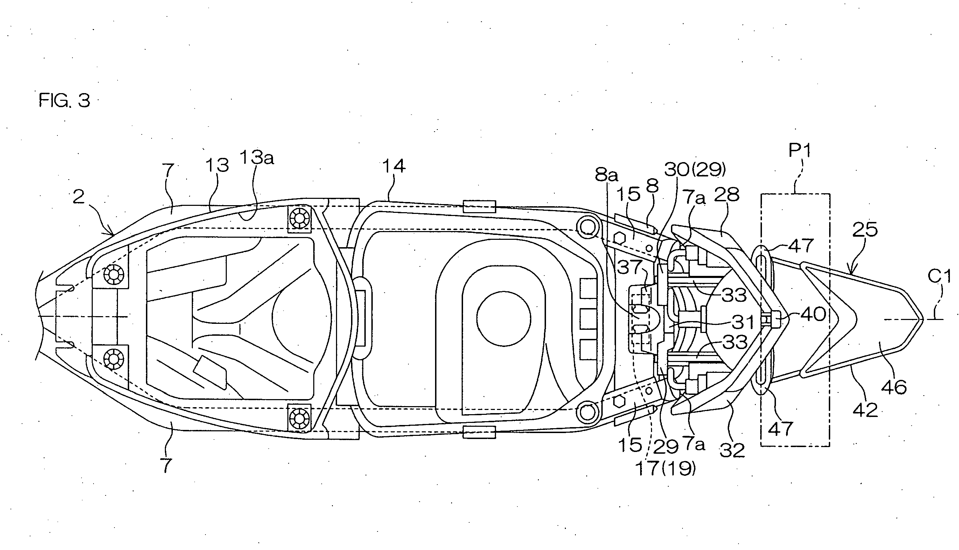

FIG. 1 is a schematic left side view of the motorcycle 1 according to a preferred embodiment, and FIG. 2 is a rear view thereof. FIG. 3 is a schematic plan view of a storage box 13, a fuel tank 14, and a taillight 28. An example where the motorcycle 1 is an underbone type, saddle type vehicle shall be described below.

As shown in FIG. 1, the motorcycle 1 includes a front wheel Wf, a rear wheel Wr, a vehicle body frame 2 supporting the front wheel Wf and the rear wheel Wr, and a saddle type seat 3 disposed above the vehicle body frame 2. In FIG. 1, the vehicle body frame 2 is indicated by thick broken lines. The motorcycle 1 further includes an engine 4 (internal combustion engine) generating a motive power that makes the motorcycle 1 travel and a drive mechanism transmitting the motive power of the engine 4 to the rear wheel Wr.

As shown in FIG. 1, the vehicle body frame 2 includes a head pipe 5 extending obliquely upward to the rear, a main frame 6 extending obliquely downward to the rear from the head pipe 5, and a pair of right and left seat frames 7 extending obliquely upward to the rear from the main frame 6. As shown in FIG. 3, the vehicle body frame 2 further includes a cross member 8 coupling the pair of seat frames 7. The pair of seat frames 7 extend in the front/rear direction and are spaced apart from each other by an interval in the vehicle width direction. The cross member 8 extends from one of the seat frames 7 to the other seat frame 7.

As shown in FIG. 1, the seat 3 is disposed above the pair of seat frames 7. The seat 3 is supported by the pair of seat frames 7. The seat 3 extends in the front/rear direction. The seat 3 may be for seating one person or for seating two persons. FIG. 1 shows an example where a two-person seat, including a driver seat 3a on which a driver sits and a tandem seat 3b on which a passenger sits, is used as the seat 3. As shown in FIG. 1 and FIG. 2, the motorcycle 1 includes steps S1 on which the feet of the driver are set, steps S2 on which the feet of the passenger are set, and a grip G1 gripped by the passenger. The grip G1 is a U-shaped bar in a plan view and is disposed along an edge portion of a rear portion of the seat 3. The grip G1 is fixed to the seat frames 7.

As shown in FIG. 1, the motorcycle 1 includes a handle H1 operated by the driver and a front fork 9 rotating around a central axis of a steering shaft together with the handle H1 and the front wheel Wf.

As shown in FIG. 1, the front fork 9 rotatably supports the front wheel Wf. The front fork 9 is supported by the head pipe 5. The front wheel Wf is thus supported by the vehicle body frame 2 via the front fork 9. The steering shaft of the front fork 9 is inserted inside the head pipe 5 of the vehicle body frame 2. The steering shaft is rotatable around a steering axis (central axis of the steering shaft) with respect to the head pipe 5. The handle H1 is mounted on the front fork 9 at a position higher than the head pipe 5. The handle H1 is disposed further to the front than the seat 3 at a height higher than the seat 3. When the handle H1 is operated, the front wheel Wf and the front fork 9 rotate to the right or left together with the handle H1. The motorcycle 1 is thereby steered.

As shown in FIG. 1, the motorcycle 1 includes a pivot shaft 10 extending in the vehicle width direction behind the engine 4, a swing arm 11 swinging in the up/down direction around a central axis of the pivot shaft 10 together with the rear wheel Wr, and a rear suspension 12 supporting the rear wheel Wr and the swing arm 11.

As shown in FIG. 1, the pivot shaft 10 is positioned behind the engine 4 in a side view. The pivot shaft 10 is mounted on the vehicle body frame 2. The swing arm 11 extends rearward from the pivot shaft 10. The swing arm 11 is mounted on the vehicle body frame 2 via the pivot shaft 10. The rear wheel Wr is rotatably supported by a rear end portion of the swing arm 11. The rear wheel Wr is supported by the vehicle body frame 2 via the pivot shaft 10 and the swing arm 11. The rear wheel Wr is disposed below the seat 3 and behind the engine 4. The rear wheel Wr is disposed below the pair of seat frames 7 in a side view.

As shown in FIG. 1, the motorcycle 1 includes the storage box 13 that is open upward and a fuel tank 14 that contains a fuel to be supplied to the engine 4.

As shown in FIG. 1, the storage box 13 and the fuel tank 14 are disposed below the seat 3. The storage box 13 and the fuel tank 14 are coupled to the vehicle body frame 2 and are supported by the vehicle body frame 2. As shown in FIG. 3, the pair of seat frames 7 are disposed at the right and left of the storage box 13. The storage box 13 is disposed in front of the fuel tank 14. A rear end portion of the storage box 13 overlaps with a front end portion of the fuel tank 14 in a plan view. Rear ends 7a of the seat frames 7 are disposed further to the rear than the fuel tank 14. Similarly, a rear end of the cross member 8 is disposed further to the rear than the fuel tank 14. A rear end portion of the fuel tank 14 is mounted on a pair of brackets 15 respectively disposed above a right end portion and a left end portion of the cross member 8. The pair of brackets 15 are fixed to the seat frames 7 and the cross member 8. The rear end portion of the fuel tank 14 is thus supported by the vehicle body frame 2 via the pair of brackets 15.

As shown in FIG. 1, the motorcycle 1 includes a seat coupling apparatus 16 coupling the seat 3 to the vehicle body frame 2 and a seat locking apparatus 17 locking the seat 3 to the vehicle body frame 2.

As shown in FIG. 1, the seat coupling apparatus 16 is coupled to a front portion of the seat 3. The seat coupling apparatus 16 is further coupled to the storage box 13 mounted on the vehicle body frame 2. The seat 3 is thus coupled to the vehicle body frame 2 via the seat coupling apparatus 16 and the storage box 13. The seat locking apparatus 17 is coupled to the vehicle body frame 2 in a manner enabling removal of a rear portion of the seat 3. With respect to the vehicle body frame 2, the seat 3 is rotatable up and down around a horizontal opening/closing axis extending in the vehicle width direction. Around the opening/closing axis, the seat 3 is movable up and down between a closed position (position of solid lines in FIG. 1) at which an opening portion 13a of the storage box 13 is closed and an open position (position of alternate long and two short dashed lines in FIG. 1) at which the opening portion 13a of the storage box 13 is opened. The opening portion 13a of the storage box 13 is thus opened and closed by the seat 3.

As shown in FIG. 1, the seat locking apparatus 17 includes a locking member 18 and a locking mechanism 19 that locks the locking member 18.

As shown in FIG. 1, the locking member 18 is mounted on the seat 3 and the locking mechanism 19 is mounted on the vehicle body frame 2. The locking member 18 projects downward from the seat 3. The locking member 18 includes a base portion 18a extending downward from the seat 3 and a shaft portion 18b that has a U-shape opening upward. The shaft portion 18b extends downward from the base portion 18a. The locking member 18 moves up and down around the opening/closing axis together with the rear portion of the seat 3. The locking mechanism 19 is switched between a locked state in which the locking member 18 is locked and an unlocked state in which the locking of the locking member 18 is released. The seat locking apparatus 17 causes the locking mechanism 19 to lock the locking member 18 in a state where a front portion of the seat 3 is coupled to the vehicle body frame 2 by the seat coupling apparatus 16. The entire seat 3 is thereby locked onto the vehicle body frame 2.

As shown in FIG. 1, the locking mechanism 19 is disposed lower than the pair of seat frames 7. As shown in FIG. 3, the locking mechanism 19 is disposed between the pair of seat frames 7 in a plan view. The locking mechanism 19 is disposed at a position overlapping with a vehicle center C1. The vehicle center C1 is defined by a vertical plane containing a bisector bisecting the vehicle body frame 2 in the vehicle width direction. The cross member 8 is disposed above the locking mechanism 19. A portion of the cross member 8 overlaps with the locking mechanism 19 in a plan view. The locking mechanism 19 is disposed below an opening portion 8a that penetrates through the cross member 8 in the up/down direction. When the seat 3 is opened or closed, the locking member 18 passes through the opening portion 8a of the cross member 8 in the up/down direction.

As shown in FIG. 1, the motorcycle 1 includes a vehicle body cover 20 that covers the vehicle body frame 2, etc. The vehicle body cover 20 includes a handle cover 21 covering the handle H1, a leg shield 22 disposed in front of the legs of the driver seated on the seat 3, and a rear cover 23 covering side surfaces of the pair of seat frames 7. The vehicle body cover 20 further includes a front fender 24 covering the front wheel Wf and a rear fender 25 covering the rear wheel Wr.

As shown in FIG. 1, the handle cover 21 is mounted on the handle H1. The leg shield 22 is disposed below the handle cover 21 in a side view. The rear cover 23 is disposed at sides of the pair of seat frames 7. A lower portion of the leg shield 22 has, for example, a bifurcated shape that is recessed upwardly in a front view and a portion (a cylinder body 4a) of the engine 4 is disposed between lower portions of the leg shield 22. The rear cover 23 is disposed further to the rear than the engine 4. The rear cover 23 extends from below the seat 3 to behind the seat 3 in a side view. The rear cover 23 is disposed at sides of and above the respective seat frames 7. The rear wheel Wr is disposed below the rear cover 23 in a side view and the rear fender 25 extends obliquely downward to the rear from the rear cover 23 in a side view. A rear end portion of the rear fender 25 is disposed further to the rear than the rear cover 23.

As shown in FIG. 1, the front fender 24 is disposed above and behind the front wheel Wf and the rear fender 25 is disposed above and behind the rear wheel Wr. The front fender 24 projects downward from the leg shield 22 in a side view. The front fender 24 is mounted on the front fork 9. The front fender 24 rotates to the right and left around the steering axis together with the front fork 9. The rear fender 25 is mounted on the pair of seat frames 7. Portions of the rear cover 23 are disposed at sides of the rear fender 25 and overlap with the rear fender 25 in a side view. The rear fender 25 is disposed lower than the seat 3. The fuel tank 14, the cross member 8, and the bracket 15 are disposed above the rear fender 25.

As shown in FIG. 1, with the vehicle body cover 20, a recessed portion 26, which is recessed lower than the seat 3, is formed between the seat 3 and the handle H1 in the front/rear direction. The storage box 13 is disposed behind the recessed portion 26. A bottom of the recessed portion 26 is disposed above the engine 4 and the main frame 6. A portion of the engine 4 is disposed below the recessed portion 26 and the vehicle body frame 2. The engine 4 includes the cylinder body 4a and a crankcase 4b that are at least partially disposed below the recessed portion 26 and the vehicle body frame 2. A center line L1 of the cylinder extends in the front/rear direction in a plan view and is inclined at an angle of no more than 45 degrees with respect to the horizontal plane. The engine 4 is disposed lower than the seat 3. The engine 4 is fixed to the vehicle body frame 2. The engine 4 is disposed between the front wheel Wf and the rear wheel Wr in the front/rear direction.

As shown in FIG. 1, the motorcycle 1 includes a headlight 27 mounted on a front portion of the motorcycle 1 and the taillight 28 mounted on a rear portion of the motorcycle 1.

As shown in FIG. 1, the headlight 27 is disposed in front of the handle H1. The headlight 27 is thus disposed higher than the seat 3. The handle cover 21 houses a portion of the headlight 27. The headlight 27 is exposed from an opening portion 21a of the handle cover 21 that is open to the front. On the other hand, the taillight 28 is disposed behind the seat 3. The taillight 28 is disposed above the rear fender 25. The taillight 28 is thus disposed above the rear wheel Wr. The rear cover 23 houses a portion of the taillight 28. As shown in FIG. 2, the taillight 28 is exposed from an opening portion 23a of the rear cover 23 that is open to the rear.

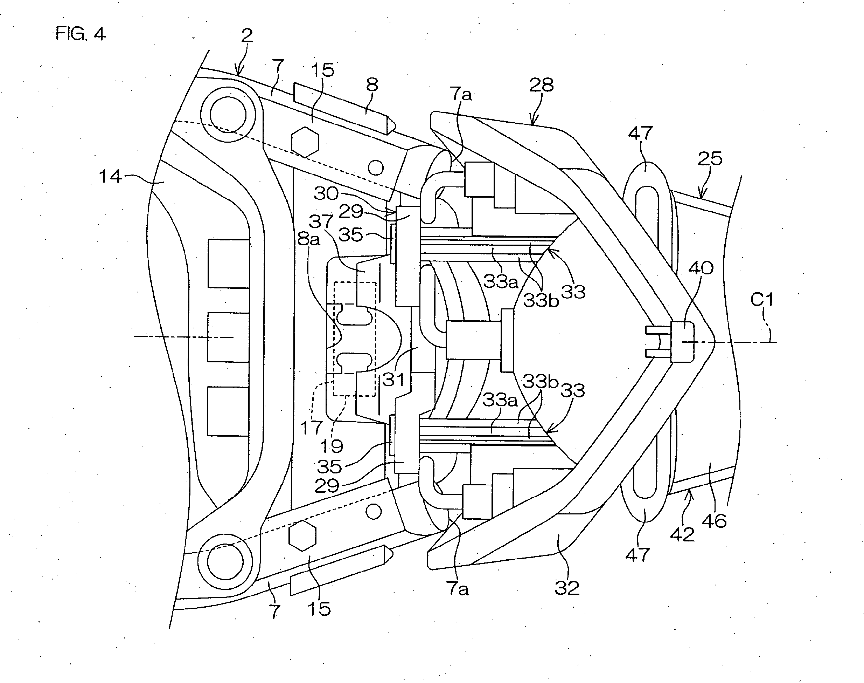

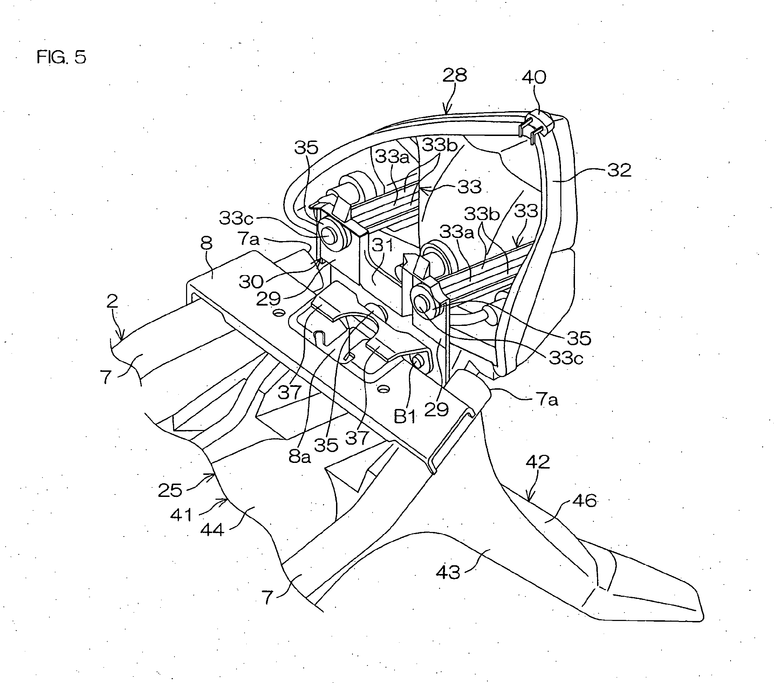

FIG. 4 is a schematic plan view of surroundings of the taillight 28. FIG. 5 is a schematic perspective view of surroundings of the taillight 28. FIG. 5 shows a state where the fuel tank 14 and the bracket 15 have been removed.

As shown in FIG. 5, the motorcycle 1 includes a mounting member 30 and a coupling member 31. The mounting member 30 includes a pair of light mounting portions 29 on which the taillight 28 is mounted. The coupling member 31 couples the pair of light mounting portions 29.

As shown in FIG. 4, the pair of light mounting portions 29 are spaced apart from each other by an interval in the vehicle width direction. The pair of light mounting portions 29 oppose each other across the interval in the vehicle width direction. The coupling member 31 is disposed between the pair of light mounting portions 29. The pair of light mounting portions 29 are disposed at the right and left of the vehicle center C1, and the coupling member 31 is disposed at a position overlapping with the vehicle center C1. As shown in FIG. 5, an upper end of the coupling member 31 is disposed lower than the upper ends of the light mounting portions 29. The upper end of the coupling member 31 is thus lower than the upper ends of the light mounting portions 29. The light mounting portions 29 and the coupling member 31 thus form, between the pair of light mounting portions 29, a recess that is recessed lower than the upper ends of the light mounting portions 29.

As mentioned above, the locking member 18 (see FIG. 1) of the seat locking apparatus 17 moves in the up/down direction together with the seat 3 when the seat 3 is opened or closed. The seat 3 is rotatable up and down around the opening/closing axis with respect to the vehicle body frame 2 and thus when the seat 3 is opened or closed, the locking member 18 moves in the up/down direction while tracing an arcuate locus. The arcuate locus through which the locking member 18 passes intersects the recess between the pair of light mounting portions 29.

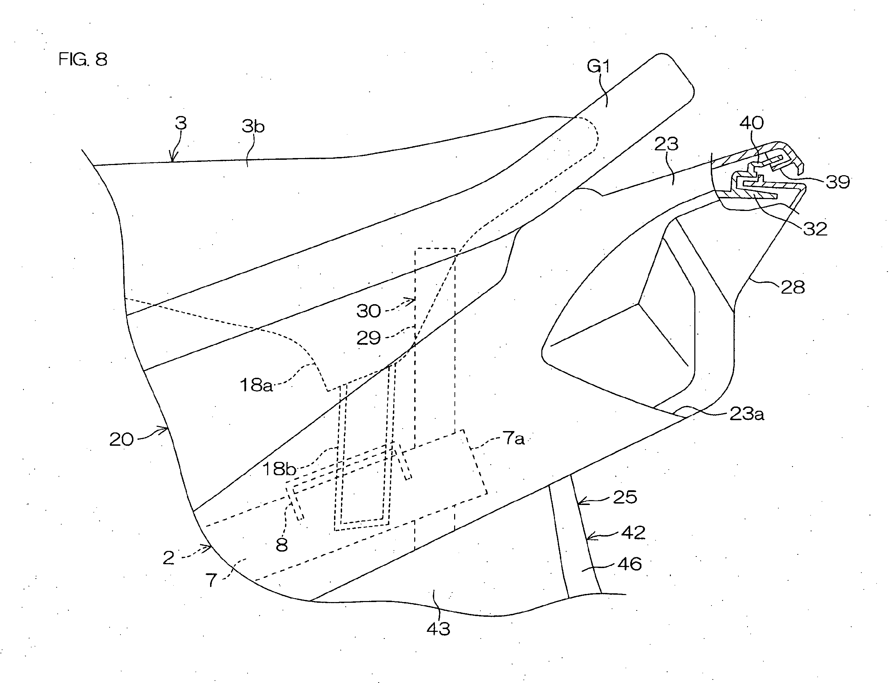

When the seat 3 is opened or closed, the shaft portion 18b of the locking member 18 moves in front of the recess between the pair of light mounting portions 29 and the base portion 18a of the locking member 18 passes through the recess between the pair of light mounting portions 29 (see FIG. 8). Collision of the locking member 18 against the mounting member 30 and the coupling member 31 is thereby prevented. Further, in a state where the seat 3 is closed, the base portion 18a of the locking member 18 is positioned in the recess between the pair of light mounting portions 29 (see FIG. 8). Heights of the locking member 18 and the mounting member 30 in the state where the seat 3 is closed are thereby reduced. Similarly, heights of the locking member 18 and the coupling member 31 in the state where the seat 3 is closed are reduced. A height of the vehicle rear portion is thereby reduced and compactness of the motorcycle 1 is achieved. Further, by a portion of the base portion 18a of the locking member 18 being disposed between the pair of light mounting portions 29, lengths in the front/rear direction of the locking member 18 and the mounting member 30 are reduced and the vehicle rear portion can thus be made compact in the front/rear direction.

As shown in FIG. 4, the light mounting portions 29 and the coupling member 31 are positioned behind the cross member 8. The light mounting portions 29 and the coupling member 31 are thus disposed further to the rear than the fuel tank 14. Rear ends 7a of the seat frames 7 are disposed further to the rear than the light mounting portions 29 and the coupling member 31. The mounting member 30 is thus disposed further to the front than the rear ends 7a of the seat frames 7 and is disposed between the pair of seat frames 7 in a plan view. An entirely of the mounting member 30 may be disposed further to the rear than the rear ends 7a of the seat frames 7 or just a portion of the mounting member 30 may be disposed further to the rear than the rear ends 7a of the seat frames 7.

As shall be described later, the light mounting portions 29 and the coupling member 31 extend upward from the rear fender 25. As shown in FIG. 5, upper ends of the light mounting portions 29 are disposed higher than the cross member 8. Similarly, an upper end of the coupling member 31 is disposed higher than the cross member 8. The mounting member 30 and the coupling member 31 thus extend higher than the cross member 8 from the rear fender 25. A portion of each light mounting portion 29 extends in the vertical direction above the rear fender 25. Similarly, a portion of the coupling member 31 extends in the vertical direction above the rear fender 25. The mounting member 30 and the coupling member 31 thus include vertical portions extending in the vertical direction.

An entirety or a portion of each light mounting portion 29 may extend in an inclining direction inclined in the front/rear direction with respect to the vertical direction. That is, the mounting member 30 may have an inclining portion extending in the inclining direction. Also, the mounting member 30 may extend in the vertical direction or the inclining direction from a lower end to an upper end or may include a vertical portion and an inclining portion. Further, the mounting member 30 may include a thick portion and a thin portion that differ mutually in thickness. For example, each light mounting portion 29 may include a thick portion making up a lower end portion of the light mounting portion 29 and a thin portion extending vertically upward from the thick portion. Further, in addition to the thick portion and the thin portion, each light mounting portion 29 may include an inclining portion extending upward from the thin portion. Also, a front edge of the mounting member 30 may include a portion that extends vertically. Similarly, a rear edge of the mounting member 30 may include a portion that extends vertically.

As shown in FIG. 5, each light mounting portion 29 is arranged from an upright plate. Similarly, the coupling member 31 is arranged from an upright plate. The light mounting portions 29 and the coupling member 31 are formed, for example, of resin. The coupling member 31 and the mounting member 30 are integral. The coupling member 31 may be a separate member from the light mounting portions 29. As shown in FIG. 4, at least a portion of a front surface of the coupling member 31 is disposed further to the rear than front surfaces of the light mounting portions 29, and at least a portion of the rear surface of the coupling member 31 is disposed further to the rear than rear surfaces of the light mounting portions 29. The coupling member 31 is thus recessed further to the rear than the front surfaces of the light mounting portions 29 and projects further to the rear than the rear surfaces of the light mounting portions 29.

As shown in FIG. 4, a length of each light mounting portion 29 in the vehicle width direction (up/down direction in FIG. 4) is greater than a length of the light mounting portion 29 in the front/rear direction (right/left direction in FIG. 4). Similarly, a length of the coupling member 31 in the vehicle width direction is greater than a length of the coupling member 31 in the front/rear direction. A length of the mounting member 30 in the vehicle width direction is thus greater than a length of the mounting member 30 in the front/rear direction, and a length of the coupling member 31 in the vehicle width direction is thus greater than a length of the coupling member 31 in the front/rear direction. The mounting member 30 and the coupling member 31 thus deflect more easily in the front/rear direction than in the vehicle width direction. The length of each light mounting portion 29 in the front/rear direction may be made equal to or different from the length of the coupling member 31 in the front/rear direction. The light mounting portion 29 and the coupling member 31 are thinner than the cross member 8 in the front/rear direction.

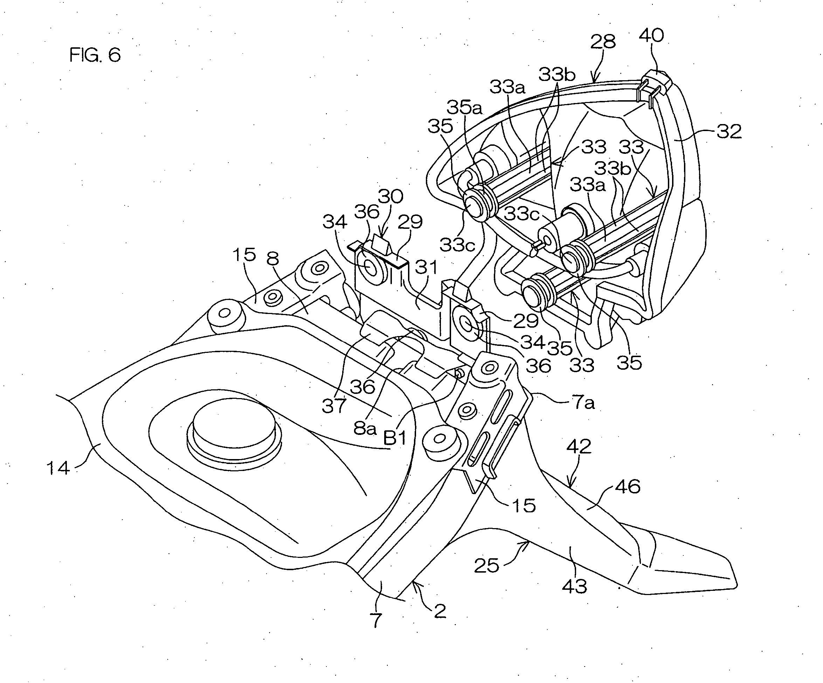

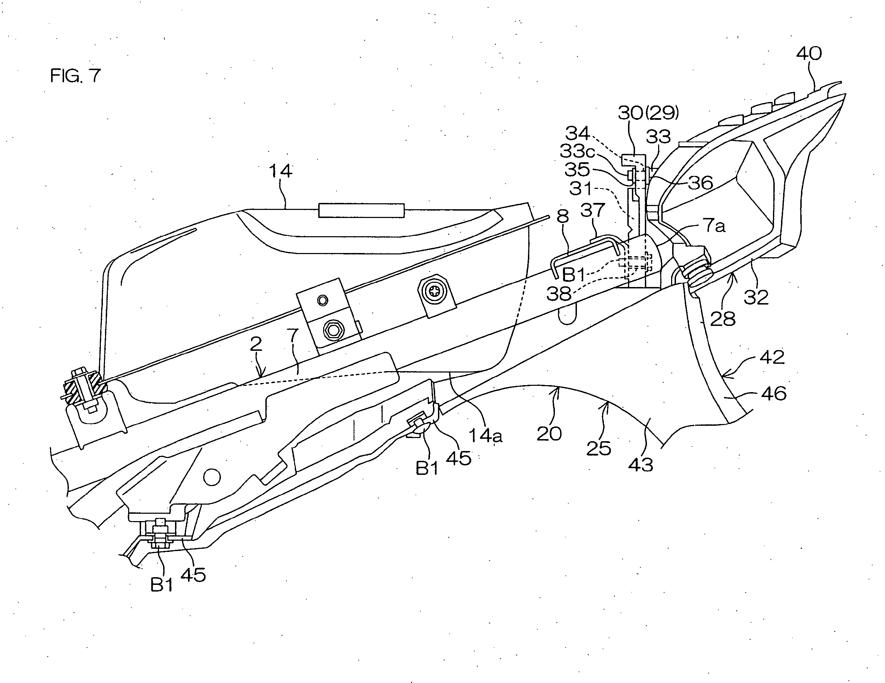

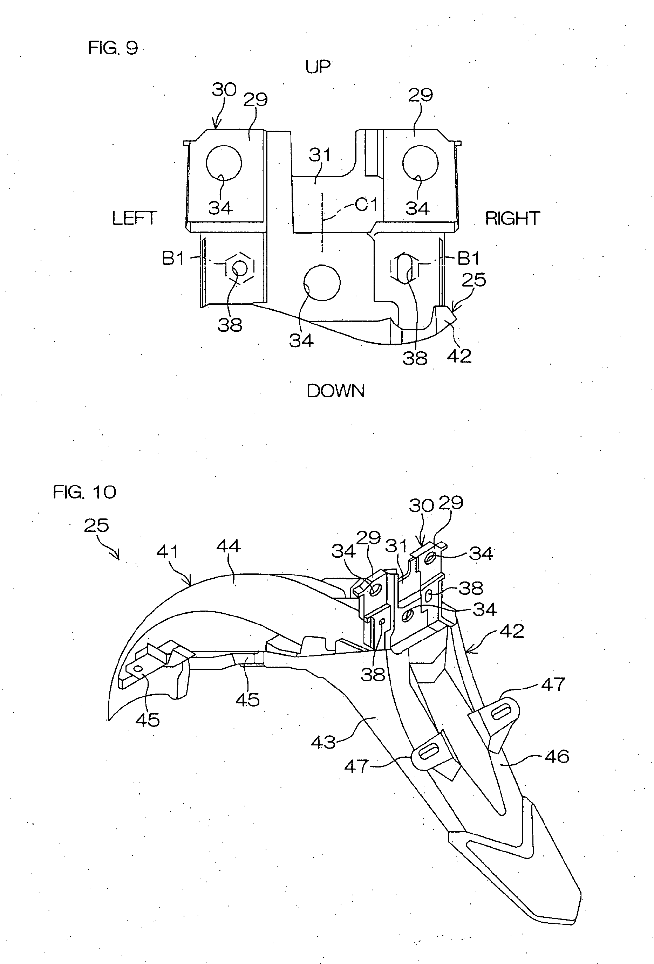

FIG. 6 is a schematic exploded perspective view of a state where the taillight 28 has been removed. FIG. 7 is a schematic side view of surroundings of the taillight 28. FIG. 8 is a partial sectional view of a state where the taillight 28 is supported by the vehicle body cover 20. FIG. 9 is a rear view of the mounting member 30 and the coupling member 31.

As shown in FIG. 6, the motorcycle 1 includes an insertion type mounting structure for mounting the taillight 28 onto the mounting member 30. That is, the taillight 28 includes a plurality of light mounting shafts 33 inserted into a plurality of light mounting holes 34 provided in the mounting member 30 and the coupling member 31. The motorcycle 1 further includes pluralities of resilient bushings 35 and resilient rings 36 interposed between outer peripheral surfaces of the light mounting shafts 33 and inner peripheral surfaces of the light mounting holes 34. The mounting structure is arranged from the light mounting shafts 33, the light mounting holes 34, the resilient bushings 35, and the resilient rings 36.

As shown in FIG. 6, the taillight 28 includes a light main body 32 as a housing that houses an electric light and the plurality of light mounting shafts 33 extending to the front from the light main body 32. FIG. 6 shows an example where three light mounting shafts 33 are provided. Of the three light mounting shafts 33, two light mounting shafts 33 (upper light mounting shafts) are disposed at the same height and oppose each other across an interval in the vehicle width direction. The other single light mounting shaft 33 (lower light mounting shaft) is disposed lower than the two light mounting shafts 33 and is disposed between the two light mounting shafts 33 in the vehicle width direction. Each light mounting shaft 33a has the columnar outer peripheral surface 33a extending in the front/rear direction, a plurality of reinforcing ribs 33b extending outward in radial directions from the outer peripheral surface 33a, and a tip portion 33c (front end portion) on which the resilient bushing 35 is mounted. The reinforcing ribs 33b are spaced apart at intervals in a circumferential direction of the light mounting shaft 33 and extend in the front/rear direction along the outer peripheral surface 33a.

As shown in FIG. 9, each light mounting portion 29 of the mounting member 30 has formed therein the light mounting hole 34 into which the tip portion 33c of the light mounting shaft 33 is inserted. Similarly, the coupling member 31 has formed therein the light mounting hole 34 into which the tip portion 33c of the light mounting shaft 33 is inserted. The light mounting hole 34 penetrates through a light mounting portion 29 or the coupling member 31 in the front/rear direction. The two light mounting holes 34 (upper light mounting holes) provided in the two light mounting portions 29 are disposed at the same height and are aligned in the vehicle width direction across an interval. The light mounting hole 33 (lower light mounting hole) provided in the coupling member 31 is disposed lower than the other two light mounting holes 34 and is disposed between the other two light mounting holes 34 in the vehicle width direction. The light mounting hole 34 provided in the coupling member 31 is positioned below a recess between the pair of light mounting holes 34.

As shown in FIG. 6, the three resilient bushings 35 are respectively mounted on the tip portions 33c of the three light mounting shafts 33. The tip portion 33c of each light mounting shaft 33 is inserted inside the resilient bushing 35 and is surrounded by the resilient bushing 35. The resilient bushing 35 is a resilient body formed of a resilient material, such as rubber or resin, etc. The resilient bushing 35 includes an outer peripheral portion, along an entire periphery of which is formed a mounting groove 35a that is inwardly recessed in radial directions. The plurality of resilient rings 36 are respectively disposed inside the plurality of light mounting holes 34. Each resilient ring 36 is held by a light mounting portion 29 or the coupling member 31.

When the taillight 28 is to be mounted onto the mounting member 30, the three light mounting shafts 33 are respectively inserted into the three light mounting holes 34. In this process, the resilient bushings 35 are press-fitted into the resilient rings 36. The taillight 28 is thus mounted onto mounting member 30 and the coupling member 31 via the resilient bushings 35 and the resilient rings 36: The resilient bushings 35 and the resilient rings 36, which are resilient bodies, are interposed between the outer peripheral surfaces of the light mounting shafts 33 and the inner peripheral surfaces of the light mounting holes 34. Vibrations of the mounting member 30 and the coupling member 31 are thus absorbed by the resilient bushings 35 and the resilient rings 36. Vibrations transmitted from the mounting member 30 and the coupling member 31 to the taillight 28 are thus reduced. Further, inner peripheral portions of the resilient rings 36 fit into the mounting grooves 35a (see FIG. 6) provided in the outer peripheral portions of the resilient bushing 35. The taillight 28 is thus unlikely to become detached from the mounting member 30 and the coupling member 31.

As shown in FIG. 6, the motorcycle 1 includes a coupling structure that couples the mounting member 30 to the vehicle body frame 2. That is, the motorcycle 1 includes a stay 37 extending rearward from the cross member 8 and a plurality of bolts B1 coupling the mounting member 30 to the stay 37. The coupling structure is arranged from the stay 37 and the bolts B1. The stay 37 is fixed to the cross member 8, and the mounting member 30 is coupled to the cross member 8 via the stay 37.

As shown in FIG. 9, two bolts B1 are inserted into bolt mounting holes 38 provided in the pair of light mounting portions 29. The two bolt mounting holes 38 are disposed at the same height and are aligned across an interval in the vehicle width direction. Each bolt mounting hole 38 may be a circular hole in a rear view or may be a slot that is long in the up/down direction. FIG. 9 shows an example where the left bolt mounting hole 38 is a circular hole and the right bolt mounting hole 38 is a slot. The two bolt mounting holes 38 are disposed lower than the two light mounting holes 34 provided in the pair of light mounting portions 29. A portion of the light mounting hole 34 provided in the coupling member 31 is disposed at the same height as the two bolt mounting holes 38 and is positioned between the two bolt mounting holes 38.

As shown in FIG. 7, the bolts B1 are mounted onto the mounting member 30 from the rear. Head portions of the bolts B1 are disposed behind the light mounting portion 29 and shaft portions of the bolts B1 are inserted into the bolt mounting holes 38 from the rear. Tip portions of the shaft portions of the bolts B1 are disposed in front of the mounting member 30 and are screwed into the stay 37 in front of the mounting member 30. The mounting member 30 is thereby fixed to the stay 37. As mentioned above, the two bolt mounting holes 38 are disposed lower than the two light mounting holes 34 provided in the pair of light mounting portions 29. The taillight 28 is thus mounted on the mounting member 30 at mounting positions (positions of the light mounting holes 34) higher than coupling positions (positions of the bolt mounting holes 38) of the mounting member 30 and the cross member 8. Further, the mounting positions of the taillight 28 with respect to the mounting member 30 (positions of the light mounting holes 34) are disposed higher than the fuel tank 14 and thus the mounting of the taillight 28 onto the mounting member 30 is unlikely to be obstructed by the fuel tank 14. The taillight 28 can thus be mounted readily onto the mounting member 30.

As shown in FIG. 7, the taillight 28 is disposed behind the mounting member 30. The mounting member 30 projects downward from the seat frames 7 in a side view. The cross member 8 is disposed in front of the mounting member 30 and the fuel tank 14 is disposed in front of the cross member 8. The stay 37 extends from an upper surface of the cross member 8 to a front surface of the mounting member 30. The fuel tank 14 is longer in the front/rear direction than any of the cross member 8, the taillight 28, the mounting member 30, and the stay 37. The cross member 8 is longer in the front/rear direction than the mounting member 30 and is shorter in the front/rear direction than the taillight 28. A rear end portion (portion including a supported portion 40) of the taillight 28 is an upper end portion thereof, and is disposed higher than the fuel tank 14. A bottom portion 14a of the fuel tank 14 is disposed lower than the taillight 28. A portion of the rear fender 25 is disposed at the same height as the bottom portion 14a of the fuel tank 14.

As shown in FIG. 8, the motorcycle 1 includes a supporting structure with which the taillight 28 is supported by the rear cover 23. That is, the rear cover 23 includes a supporting portion 39 supporting the taillight 28 and the taillight 28 includes the supported portion 40 supported by the rear cover 23. The supporting structure is arranged from the supporting portion 39 and the supported portion 40.

As shown in FIG. 8, the supporting portion 39 is a projection that projects forward and downward from an inner surface of a rear end portion of the rear cover 23 and the supported portion 40 is a projection that projects rearward and upward from a rear end portion of an upper portion of the taillight 28. The supporting portion 39 and the supported portion 40 are disposed in an interior of the rear cover 23. That is, the supporting portion 39 and the supported portion 40 are disposed at positions that cannot be seen in a state where the taillight 28 and the rear cover 23 have been assembled (see also FIG. 2). The supporting portion 39 and the supported portion 40 are disposed further to the rear than the mounting member 30 and higher than the mounting member 30. The supporting portion 39 and the supported portion 40 are disposed at a center in the vehicle width direction. That is, the supporting portion 39 and the supported portion 40 are disposed at positions overlapping with the vehicle center C1 (see FIG. 4).

As shown in FIG. 8, the supporting portion 39 forms a recess open to the front. The supported portion 40 forms a recess open to the rear. The supporting portion 39 is inserted into an interior (inside the recess) of the supported portion 40, and the supported portion 40 is latched onto the supporting portion 39. That is, a portion of the supporting portion 39 is disposed in the interior of the supported portion 40 and a portion of the supported portion 40 is disposed in an interior of the supporting portion 39. The supported portion 40 is thereby supported by the supporting portion 39. The rear cover 23 thus supports the rear end portion of the upper portion of the taillight 28.

The taillight 28 is thus supported not only by the mounting member 30 and the coupling member 31 but also by the rear cover 23. The supporting portion 39 supporting the rear end portion of the taillight 28 forms the recess open to the front and thus movements of the rear end portion of the taillight 28 in the front/rear direction and the up/down direction are restricted by the rear cover 23. Further, a front end portion of the taillight 28 is supported by the mounting member 30 and the coupling member 31 at a plurality of positions that are separated in the right/left direction, and thus movements of the front end portion of the taillight 28 in the front/rear direction, up/down direction, and right/left direction are restricted by the mounting member 30 and the coupling member 31. Stability of the taillight 28 is thereby increased.

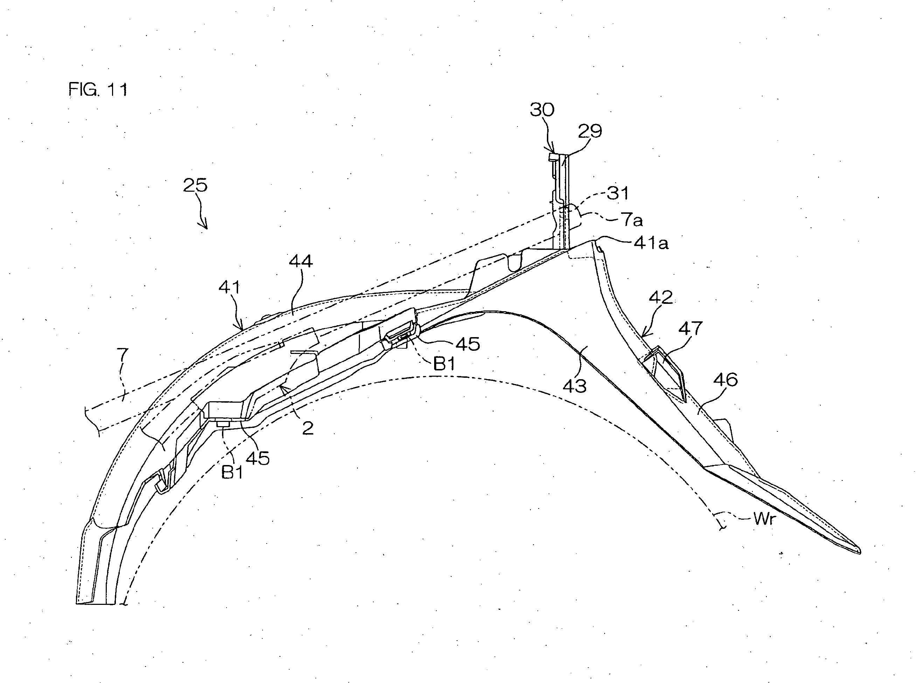

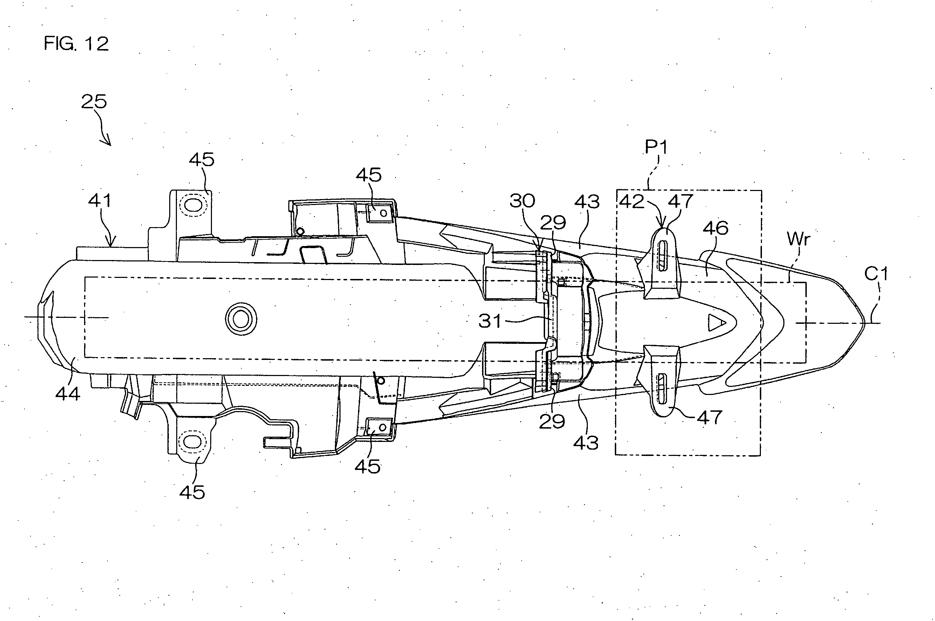

FIG. 10 is a perspective view of the rear fender 25 as viewed from obliquely upward to the left and rear. FIG. 11 is a left side view of the rear fender 25. FIG. 12 is a plan view of the rear fender 25.

As shown in FIG. 10, the rear fender 25 includes a first fender portion 41 disposed in front and above the rear wheel Wr, a second fender portion 42 extending downward from a rear end portion of the first fender portion 41 to behind the rear wheel Wr, and a pair of third fender portions 43 extending from side end portions of the first fender portion 41 to side end portions of the second fender portion 42. The first fender portion 41, the second fender portion 42, and the third fender portions 43 constitute an integral member made of resin.

As shown in FIG. 12, the first fender portion 41 extends in the front/rear direction in a plan view. The first fender portion 41 includes an upwardly convex arcuate portion 44 disposed in front of and above the rear wheel Wr and a plurality of fender mounting portions 45 coupled to the vehicle body frame 2. FIG. 12 shows an example where the first fender portion 41 is provided with four fender mounting portions 45. Of the four fender mounting portions 45, two fender mounting portions 45 (front fender mounting portions) are disposed further to the front than the other two fender mounting portions 45 (rear fender mounting portions). The two front fender mounting portions 45 are disposed at the right side and left side of the arcuate portion 44 in a plan view. Similarly, the two rear fender mounting portions 45 are disposed at the right side and left side of the arcuate portion 44 in a plan view.

As shown in FIG. 11, the first fender portion 41 extends rearward and upward above the rear wheel Wr. The two fender mounting portions 45 at the front are disposed lower than the two fender mounting portions 45 at the rear. The two fender mounting portions 45 at the front are mounted on the seat frames 7 by the bolts B1. The two fender mounting portions 45 at the front are thus coupled to the vehicle body frame 2. Also, the two fender mounting portions 45 at the rear are mounted on the vehicle body cover 20 by the bolts B1 (see also FIG. 2). The vehicle body cover 20 is mounted on the vehicle body frame 2. The two fender mounting portions 45 at the rear are thus coupled to the vehicle body cover 20. The first fender portion 41 is thus supported by the vehicle body frame 2 at a plurality of positions separated in the front/rear direction or the right/left direction.

As shown in FIG. 11, the second fender portion 42 is disposed above and behind the rear wheel Wr. The second fender portion 42 extends rearward and downward from the rear end portion of the first fender portion 41. The second fender portion 42 may extend rearward and downward from a rear end of the first fender portion 41 or may extend rearward and downward from a position further to the front than the rear end of the first fender portion 41. That is, the rear end of the first fender portion 41 may project further rearward than an upper end of the second fender portion 42. The second fender portion 42 approaches the rear wheel Wr because the second fender portion 42 extends rearward and downward. Splashing of mud from the rear wheel Wr is thus suppressed effectively by the second fender portion 42.

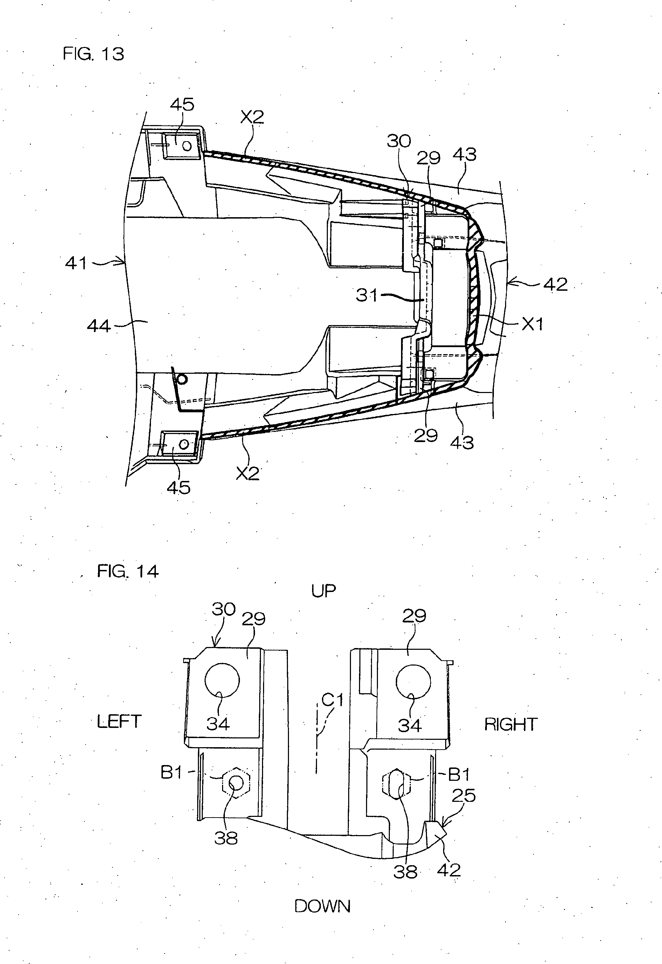

As shown in FIG. 12, an upper end portion of the second fender portion 42 is a front end portion, and is connected to the first fender portion 41. Therefore only the front end portion of the second fender portion 42 is supported by the first fender portion 41. As mentioned above, the first fender portion 41 is coupled to the pair of seat frames 7. The second fender portion 42 is thus cantilevered by the pair of seat frames 7. Further, a connection portion (hatched portion X1 in FIG. 13) of the second fender portion 42 connected to the first fender portion 41 is shorter in the front/rear direction than in the vehicle width direction. That is, the connection portion of the second fender portion 42 has a shape that is elongate in the vehicle width direction. Also, connection portions (hatched portions X2 in FIG. 13) of the third fender portions 43 connected to the first fender portion 41 are shorter in the vehicle width direction than in the front/rear direction and have shapes that are elongate in the front/rear direction.

The second fender portion 42 vibrates readily in the front/rear direction because the connection portion (hatched portion X1 in FIG. 13) of the second fender portion 42 connected to the first fender portion 41 is elongate in the vehicle width direction as described above. The third fender portions 43 vibrate readily in the vehicle width direction because the connection portions (hatched portions X2 in FIG. 13) of the third fender portions 43 connected to the first fender portion 41 are elongate in the front/rear direction. The connection portion of the second fender portion 42 connected to the first fender portion 41 may be reinforced by a rib that reduces the vibrations of the second fender portion 42 in the front/rear direction. Similarly, the connection portions of the first fender portion 41 and the third fender portions 43 may be reinforced by ribs that reduce the vibrations of the third fender portions 43 in the vehicle width direction.

As shown in FIG. 11, the second fender portion 42 includes a fender inclining portion 46 extending rearward and downward from the rear end portion of the first fender portion 41 and a pair of plate mounting portions 47 on which a license plate P1 is mounted. The fender inclination portion 46 is disposed above and behind the rear wheel Wr. The plate mounting portions 47 project upward from an upper surface of the fender inclination portion 46 that corresponds a rear surface. As shown in FIG. 12, the pair of plate mounting portions 47 are aligned in the vehicle width direction across an interval. The plate mounting portions 47 project to sides from the fender inclination portion 46 in a plan view. Outer end portions of the plate mounting portions 47 are thus disposed further outward in the vehicle width direction than the fender inclination portion 46.

As shown in FIG. 12, the license plate P1 is mounted on the pair of plate mounting portions 47 provided on the second fender portion 42. A width (length in the vehicle width direction) of the second fender portion 42 is shorter than a width of the license plate P1. A right end portion and a left end portion of the license plate P1 are thus disposed further outward in the vehicle width direction than the rear fender 25. Therefore during travelling of the motorcycle 1, wind pressure is applied to the right end portion and the left end portion of the license plate P1 and a force that vibrates the second fender portion 42 in the front/rear direction is transmitted from the license plate P1 to the second fender portion 42.

As shown in FIG. 12, the pair of third fender portions 43 are aligned across an interval in the vehicle width direction. The third fender portions 43 are disposed further to the sides than the rear wheel Wr in a plan view. As shown in FIG. 11, the third fender portions 43 are connected to the first fender portion 41 and the second fender portion 42. A right end portion of the second fender portion 42 is joined to the first fender portion 41 via the third fender portion 43 at the right side, and a left end portion of the second fender portion 42 is joined to the first fender portion 41 via the third fender portion 43 at the left side. The third fender portions 43 extend rearward and downward along the right end portion and the left end portion of the second fender portion 42. The third fender portions 43 form side walls of the rear fender 25. The second fender portion 42 is thereby reinforced.

As shown in FIG. 11, the light mounting portions 29 of the mounting member 30 extend upward from the first fender portion 41 at positions further to the front and lower than an upper end 41a of the first fender portion 41. The light mounting portions 29 are members integral to the first fender portion 41. The mounting member 30 is thus a member integral to the rear fender 25. Similarly, the coupling member 31 extends upward from the first fender portion 41 at a position further to the front and lower than the upper end 41a of the first fender portion 41. The coupling member 31 is a member integral to the first fender portion 41. The mounting member 30 may be a member that is separate from the rear fender 25. The same applies to the coupling member 31.

As described above, with the present preferred embodiment, the taillight 28 is mounted on the mounting member 30 that extends upward from the first fender portion 41 of the rear fender 25. Vibrations, which are a cause of shortening of life of the electric light, are absorbed by the mounting member 30. Durability of the taillight 28 is thereby improved.

As mentioned above, the second fender portion 42 of the rear fender 25 is cantilevered by the vehicle body frame 2 and extends rearward and downward from the first fender portion 41. Further, the connection portion of the second fender portion 42 with respect to the first fender portion 41 is elongate in the vehicle width direction. The second fender portion 42 thus vibrates more readily in the front/rear direction than in the vehicle width direction. Also, the motorcycle 1 that is travelling mainly vibrates in the up/down direction due to undulations on a road. Further, the center line L1 of the cylinder of the engine 4 (see FIG. 1) extends in the front/rear direction in a plan view and thus when a piston of the engine 4 reciprocates, vibrations of the engine 4 having front/rear direction components as main components are generated in the motorcycle 1. The vibrations of the engine 4 are high frequency vibrations that are lower in amplitude than the vibrations due to travel.

Various vibrations differing in amplitude, frequency, and direction are thus generated in the motorcycle 1. The taillight 28 is mounted on the mounting member 30 extending upward from the rear fender 25. As mentioned above, the second fender portion 42 of the rear fender 25 vibrates more readily in the front/rear direction than in the vehicle width direction. Front/rear direction vibrations are thus transmitted readily from the rear fender 25 to the taillight 28 via the mounting member 30. Front/rear direction vibrations must thus be taken into consideration in particular.

The mounting member 30 with the taillight 28 mounted thereon is thinner in the front/rear direction than in the vehicle width direction. Therefore the mounting member 30 deflects readily in the front/rear direction. The mounting member 30 can thus absorb front/rear direction vibrations transmitted from the rear fender 25. The front/rear direction vibrations transmitted from the mounting member 30 to the taillight 28 can thus be reduced and the taillight 28 can be improved in durability. Further, the rear portion of the motorcycle 1 can be made compact because the mounting member 30 is thin in the front/rear direction.

With the motorcycle 1 according to the present preferred embodiment, a portion in a vicinity of the taillight 28, that is, the vehicle rear portion can be reduced in the front/rear direction length as described above. At least portions of the storage box 13 and the fuel tank 14 are disposed in front of the taillight 28. Therefore by reducing the front/rear direction length of the vehicle rear portion, the storage box 13 and the fuel tank 14 can be enlarged in the front/rear direction to increase capacities of the storage box 13 and the fuel tank 14. Sufficient capacities can thereby be secured in the storage box 13 and the fuel tank 14.

Also with the present preferred embodiment, the mounting member 30 is integral to the first fender portion 41. In a case where the mounting member 30 is not integral to the rear fender 25, a mounting portion for mounting a lower portion of the mounting member 30 onto the rear fender 25 must be provided at the lower portion of the mounting member 30. In this case, the lower portion of the mounting member 30 may become large in the up/down direction and/or the front/rear direction. When the lower portion of the mounting member 30 becomes large, the mounting member 30 may not deflect readily in the front/rear direction or the vehicle rear portion that includes the rear cover 23 and the taillight 28 may become large. If the mounting member 30 is integral to the first fender portion 41, there is no need to provide the mounting portion for mounting the lower portion of the mounting member 30 onto the rear fender 25. The abovementioned problem can thus be prevented from occurring.

Also with the present preferred embodiment, the mounting member 30 includes the vertical portion extending in the vertical direction. The lower end portion of the mounting member 30 is supported by the rear fender 25 and the mounting member 30 is cantilevered by the rear fender 25. At least a portion of the mounting member 30 extends in the vertical direction. That is, at least a portion of the mounting member 30 extends along a vertical plane. The mounting member 30 is thus made long in the up/down direction. The mounting member 30 is thereby made to deflect even more readily in the front/rear direction and the mounting member 30 is made compact in the front/rear direction.

With the present preferred embodiment, the light mounting shafts 33 of the taillight 28 are inserted into the light mounting holes 34 formed in the mounting member 30. The mounting portion in which the light mounting holes 34 are formed is disposed at the same position as the lower end portion of the mounting member 30 in regard to the vehicle front/rear direction. The portion (mounting portion) of the mounting member 30 on which the taillight 28 is mounted is thus disposed at the same position as the lower end portion of the mounting member 30 in regard to the vehicle front/rear direction. Therefore, the length of the mounting member 30 in the front/rear direction can be reduced more than in a case where the mounting portion is disposed further to the front or rear than the lower end portion of the mounting member 30. The front/rear direction length of the vehicle rear portion can thereby be reduced. Therefore, even when the taillight 28 becomes large, increase of total length of the motorcycle 1 can be suppressed.

Also with the present preferred embodiment, the mounting member 30 is coupled to the cross member 8 and thus the vibrations transmitted from the rear fender 25 to the mounting member 30 are absorbed by the mounting member 30. The front/rear direction vibrations transmitted to the taillight 28 can thus be reduced. The durability of the taillight 28 can thereby be improved.

Also with the present preferred embodiment, the mounting positions of the taillight 28 with respect to the mounting member 30 are set higher than the coupling positions of the mounting member 30 and the cross member 8. Therefore, when the taillight 28 is being mounted onto the mounting member 30, the bolts B1 or other fastening members that couple the mounting member 30 to the cross member 8 are unlikely to be obstructions and the taillight 28 can be mounted easily onto mounting member 30. Further, a distance from the lower end portion of the mounting member 30 to each mounting position of the taillight 28 is made long and the front/rear direction vibrations transmitted from the mounting member 30 to the taillight 28 can thus be reduced further.

Also with the present preferred embodiment, the motorcycle 1 is provided with the insertion type mounting structure for mounting the taillight 28 onto the mounting member 30. That is, the taillight 28 can be mounted onto the mounting member 30 by a simple process of inserting the light mounting shafts 33 of the taillight 28 into the light mounting holes 34 provided in the mounting member 30. The taillight 28 can thus be mounted easily onto the mounting member 30.

Also with the present preferred embodiment, the light mounting shafts 33 of the taillight 28 are supported by the mounting member 30 via the resilient bushings 35. The vibrations of the mounting member 30 are absorbed by elastic deformation of the resilient bushings 35. The vibrations transmitted from the mounting member 30 to the taillight 28 can thus be reduced further. The durability of the taillight 28 can thereby be improved further.

Also with the present preferred embodiment, the taillight 28 is supported by the supporting portion 39 of the rear cover 23 and the taillight 28 is thus improved in stability. The vibrations of the taillight 28 can thus be reduced. The durability of the taillight 28 can thereby be improved further.

Also with the present preferred embodiment, the taillight 28 is mounted on the pair of light mounting portions 29 of the mounting member 30. That is, the taillight 28 is mounted on the mounting member 30 at a plurality of positions. The stability of the taillight 28 is thus improved. The pair of light mounting portions 29 are spaced apart from each other by the interval in the vehicle width direction (right/left direction) and thus the taillight 28 is mounted on the mounting member 30 at the plurality of positions that are separated in the right/left direction. The taillight 28 is thus restrained in the right/left direction and movement of the taillight 28 in the right/left direction is restricted. The stability of the taillight 28 is thereby improved.

Also with the present preferred embodiment, one of the light mounting portions 29 is coupled to the other light mounting portion 29 by the coupling member 31. Vibrations of each light mounting portion 29 in the front/rear direction are thus reduced. The vibrations transmitted from the mounting member 30 to the taillight 28 are thus reduced and the durability of the taillight 28 is improved further.

Also with the present preferred embodiment, an entirety or a portion of the mounting member 30 is disposed further to the front than the rear ends 7a of the pair of seat frames 7. The total length (length in the front/rear direction) of the motorcycle 1 is thus reduced in comparison to a case where at least a portion of the mounting member 30 is disposed further to the rear than the rear ends 7a of the pair of seat frames 7. The motorcycle 1 can thus be improved in compactness.

Also with the present preferred embodiment, the rear fender 25 is provided with the third fender portions 43 extending from the side end portions of the first fender portion 41 to the side end portions of the second fender portion 42. The rear fender 25 is thereby improved in rigidity and vibrations of the rear fender 25 itself are thus suppressed. Specifically, vibrations of the second fender portion 42 in the front/rear direction are suppressed. The front/rear direction vibrations transmitted from the mounting member 30 to the taillight 28 are thus reduced and the durability of the taillight 28 is improved further.

Although the description of the preferred embodiment has been given above, the present teaching is not restricted to the above contents of the preferred embodiment and various modifications are possible within the scope of the claims.

For example, with the preferred embodiment described above, the mounting member 30 is coupled to the cross member 8 via the stay 37. However, the mounting member 30 may instead be coupled directly to the cross member 8 or does not have to be coupled to the cross member 8.

Also with the preferred embodiment described above, the taillight 28 is mounted on the mounting member 30 at positions higher than the coupling positions of the mounting member 30 and the cross member 8. However, the taillight 28 may be mounted on the mounting member 30 at a height equal to the coupling positions of the mounting member 30 and the cross member 8 or a height lower than the coupling positions.

Also with the preferred embodiment described above, the motorcycle 1 includes the resilient bushings 35 and the resilient rings 36 interposed between the outer peripheral surfaces of the light mounting shafts 33 and the inner peripheral surfaces of the light mounting holes 34. However, the light mounting shafts 33 may instead be supported directly by the inner peripheral surfaces of the light mounting holes 34.

Also with the preferred embodiment described above, the mounting member 30 includes the pair of light mounting portions 29. However, the number of the light mounting portions 29 may be no less than three.

Also with the preferred embodiment described above, the pair of light mounting portions 29 are coupled by the coupling member 31. However, as shown in FIG. 14, the coupling member 31 may be omitted and a space may be provided between lower end portions of the pair of light mounting portions 29.

## Claims

1. A motorcycle (1) comprising:
a pair of seat frames (7) extending in a front/rear direction and spaced apart from each other by an interval in a width direction of the motorcycle;
a rear wheel (Wr) disposed below the pair of seat frames (7) in a side view of the motorcycle;
a rear fender (25) including a first fender portion (41) disposed above the rear wheel (Wr) and a second fender portion (42) extending downward from a rear end portion of the first fender portion (41) to behind the rear wheel (Wr), the first fender portion (41) being mounted on the pair of seat frames (7);
a cross member (8) disposed above the rear fender (25) and coupling the pair of seat frames (7);
a mounting member (30) extending from the rear fender (25) and including a pair of light mounting portions (29) that are spaced apart from each other by an interval in the width direction of the motorcycle; and
a taillight (28) disposed above the rear fender (25) and mounted on the pair of light mounting portions (29), **characterized in that**
said mounting member (30) extends higher than the cross member (8) and having a length in the width direction of the motorcycle greater than a length in a front/rear direction of the motorcycle such that the mounting member (30) deflects readily in the front/rear direction to absorb the front/rear direction vibrations transmitted from the rear fender (25); and
a length of each light mounting portion (29) in the width direction of the motorcycle is greater than a length of the light mounting portion (29) in the front/rear direction of the motorcycle, and
a coupling member (31) couples the pair of light mounting portions (29) and a length of the coupling member (31) in the width direction of the motorcycle is greater than a length of the coupling member (31) in the front/rear direction of the motorcycle, or
a space is provided between the pair of light mounting portions (29) without a coupling member (31).

2. A motorcycle (1) according to claim 1, **characterized in that** the first fender portion (41) extends rearward and upward direction of the motorcycle, and the mounting member (30) extends from the first fender portion (41) at a position further to a front of the motorcycle and lower than an upper end of the first fender portion (41) and is integral to the first fender portion (41).

3. A motorcycle (1) according to claim 1 or 2, **characterized in that** the mounting member (30) includes a vertical portion extending in a vertical direction of the motorcycle.

4. A motorcycle (1) according to any one of claims 1 to 3, **characterized in that** a portion of the mounting member (30) on which the taillight (28) is mounted is disposed at the same position as a lower end portion of the mounting member (30) in regard to the front/rear direction of the motorcycle.

5. A motorcycle (1) according to any one of claims 1 to 4, **characterized in that** the mounting member (30) is coupled to the cross member (8).

6. A motorcycle (1) according to claim 5, **characterized in that** the taillight (28) is mounted on the mounting member (30) at a position higher than a coupling position of the mounting member (30) and the cross member (8).

7. A motorcycle (1) according to any one of claims 1 to 6, **characterized in that** the taillight (28) includes a light mounting shaft (33) inserted into a light mounting hole (29) provided in the mounting member (30).

8. A motorcycle (1) according to claim 7, **characterized by**: a resilient bushing (35) interposed between an outer peripheral surface of the light mounting shaft (33) and an inner peripheral surface of the light mounting hole (29).

9. A motorcycle (1) according to any one of claims 1 to 8, **characterized by**: a rear cover (23) including a supporting portion (39) supporting the taillight (28), the rear cover (23) being disposed at sides of and above the pair of seat frames (7).

10. A motorcycle (1) according to claim 9, **characterized in that** the supporting portion (39) is disposed further to the rear of the motorcycle than the mounting member (30) and higher than the mounting member (30) and supports a rear end portion of an upper portion of the taillight (28).

11. A motorcycle (1) according to any one of claims 1 to 10, **characterized in that** at least a portion of the mounting member (30) is disposed further to a front of the motorcycle than rear ends of the pair of seat frames (7).

12. A motorcycle (1) according to any one of claims 1 to 11, **characterized in that** the rear fender (25) further includes a third fender portion (43) extending from a side end portion of the first fender portion (41) to a side end portion of the second fender portion (42).

13. A motorcycle (1) according to any one of claims 1 to 12, **characterized by**:
a seat (3) capable of opening and closing and being disposed above the seat frames (7); and
a seat locking apparatus (17) locking the seat (3) to the seat frames (7);
wherein the seat locking apparatus (17) includes a locking member (18) that moves together with the seat (3), and
the locking member (18) passes between the pair of light mounting portions (29) to overlap with the mounting member (30) in a side view of the motorcycle when the seat (3) is moved to be locked to the seat frames (7).

## Patentansprüche

1. Ein Motorrad (1) mit:
einem Paar von Sitz-Rahmen (7), die sich in eine Vorder-/Rück-Richtung erstrecken und in einem Intervall in einer Breiten-Richtung des Motorrads voneinander beabstandet sind;
einem Hinterrad (Wr), positioniert unter dem Paar von Sitz-Rahmen (7) in einer Seiten-Ansicht des Motorrads;
einem hinterer Kotflügel (25), der einen ersten Kotflügel-Abschnitt (41) beinhaltet,
positioniert über dem Hinterrad (Wr), und einen weiten Kotflügel-Abschnitt (42) beinhaltet, der sich nach unten von einem hinteren End-Abschnitt des ersten Kotflügel-Abschnitts (41) hinter das Hinterrad (Wr) erstreckt, der erste Kotflügel-Abschnitt (41) ist an dem Paar von Sitz-Rahmen (7) montiert;
einem Quer-Element (8), positioniert über dem hinteren Kotflügel (25) und koppelt das Paar von Sitz-Rahmen (7);
einem Montage-Element (30), das sich von dem hinteren Kotflügel (25) erstreckt und
ein Paar von Licht-Montage-Abschnitte (29) beinhaltet, die in einem Intervall in Breiten-Richtung des Motorrads voneinander beabstandet sind, und
einem Rücklicht (28), positioniert über dem hinteren Kotflügel (25) und montiert an dem Paar von Licht-Montage-Abschnitten (29), **dadurch gekennzeichnet, dass** dieses Montage-Element (30) sich höher als das Quer-Element (8) erstreckt und eine Länge in Breiten-Richtung des Motorrads hat, größer als eine Länge in eine Vorder-/Rück-Richtung des Motorrads, sodass das Montage-Element (30) sich leicht in die Vorder-Rück-Richtung verlagert um Vorder-/Rück-Richtungs-Vibrationen, übertragen von dem hinteren Kotflügel (25), absorbiert; und
eine Länge von jedem Licht-Montage-Abschnitt (29) in die Breiten-Richtung des Motorrads größer als eine Länge des Licht-Montage-Abschnitts (29) in die Vorder-/Rück-Richtung des Motorrads ist, und
ein Kopplungs-Element (31) das Paar von Licht-Montage-Abschnitte (29) koppelt und
eine Länge des Kopplungs-Elements (31) in die Breiten-Richtung des Motorrads größer als eine Länge des Kopplungs-Elements (31) in die Vorder-/Rück-Richtung des Motorrads ist, oder ein Raum zwischen dem Paar von Licht-Montage-Abschnitten (29) ohne einem Kopplungs-Element (31) vorgesehen ist.

2. Ein Motorrad (1) gemäß Anspruch 1, **dadurch gekennzeichnet, dass** der erste Kotflügel-Abschnitt (41) sich nach hinten und in eine Aufwärts-Richtung des Motorrads erstreckt, und das Montage-Element (30) sich von dem ersten Kotflügel-Abschnitt (41) an einer Position weiter vorne an dem Motorrad und sich niedriger als ein oberes Ende des ersten Kotflügel-Abschnitts (41) erstreckt und integral mit dem ersten Kotflügel-Abschnitt (41) ist.

3. Ein Motorrad (1) gemäß Anspruch 1 oder 2, **dadurch gekennzeichnet, dass** das Montage-Element (30) einen vertikalen Abschnitt beinhaltet, der sich in eine vertikale Richtung des Motorrads erstreckt.

4. Ein Motorrad (1) gemäß irgendeinem der Ansprüche 1 bis 3, **dadurch gekennzeichnet, dass** ein Abschnitt des Montage-Elements (30), an dem das Rücklicht (28) montiert ist, an der gleichen Position positioniert ist, wie ein unterer End-Abschnitt des Montage-Elements (30) in Bezug auf die Vorder-/Rück-Richtung des Motorrads.

5. Ein Motorrad (1) gemäß irgendeinem der Ansprüche 1 bis 4, **dadurch gekennzeichnet, dass** das Montage-Element (30) an dem Quer-Element (8) gekoppelt ist.

6. Ein Motorrad (1) gemäß Anspruch 5, **dadurch gekennzeichnet, dass** das Rücklicht (28) an dem Montage-Element (30) an einer Position, höher als eine Kopplungs-Position des Montage-Elements (30) und des Quer-Elements (8), montiert ist.

7. Ein Motorrad (1) gemäß irgendeinem der Ansprüche 1 bis 6, **dadurch gekennzeichnet, dass** das Rücklicht (28) eine Licht-Montage-Welle (33) beinhaltet, eingesetzt in ein Licht-Montage-Loch (29), vorgesehen an dem Montage-Element (30).

8. Ein Motorrad (1) gemäß Anspruch 7, **gekennzeichnet durch** eine elastische Buchse (35), eingesetzt zwischen einer äußeren Umfangsfläche der Licht-Montage-Welle (33) und einer inneren Umfangsfläche des Licht-Montage-Lochs (29).

9. Ein Motorrad (1) gemäß irgendeinem der Ansprüche 1 bis 8, **gekennzeichnet durch** eine hintere Abdeckung (23), die einen Lager-Abschnitt (39) beinhaltet, der das Rücklicht (28) lagert, die hintere Abdeckung (23) ist an Seiten von und oberhalb des Paars von Sitz-Rahmen (7) positioniert.

10. Ein Motorrad (1) gemäß Anspruch 9, **dadurch gekennzeichnet, dass** der Lager-Abschnitt (39) weiter hinten an dem Motorrad als das Montage-Element (30) und höher als das Montage-Element (30) positioniert ist und einen hinteren End-Abschnitt eines oberen Abschnitts des Rücklichts (28) lagert.

11. Ein Motorrad (1) gemäß irgendeinem der Ansprüche 1 bis 10, **dadurch gekennzeichnet, dass** zumindest ein Abschnitt des Montage-Elements (30) weiter vorne an dem Motorrad als hintere Enden des Paars von Sitz-Rahmen (7) positioniert ist.

12. Ein Motorrad (1) gemäß irgendeinem der Ansprüche 1 bis 11, **dadurch gekennzeichnet, dass** der hintere Kotflügel (25) weiterhin einen dritten Kotflügel-Abschnitt (43) beinhaltet, der sich von einem Seiten-End-Abschnitt des ersten Kotflügel-Abschnitts (41) zu einem Seiten-End-Abschnitt des zweiten Kotflügel-Abschnitts (42) erstreckt.

13. Ein Motorrad (1) gemäß irgendeinem der Ansprüche 1 bis 12, **gekennzeichnet durch**:
einen Sitz (3), der in der Lage ist geöffnet und geschlossen zu werden, und oberhalb der Sitz-Rahmen (7) positioniert ist; und
eine Sitz-Verriegelungs-Vorrichtung (17), die den Sitz (3) an den Sitz-Rahmen (7) verriegelt;
wobei die Sitz-Verriegelungs-Vorrichtung (17) ein Verriegelungs-Element (18) beinhaltet, das sich zusammen mit dem Sitz (3) bewegt, und
das Verriegelungs-Element (18) zwischen dem Paar von Licht-Montage-Abschnitten (29) hindurchtritt, um mit dem Montage-Element (30) in einer Seiten-Ansicht des Motorrads zu überlappen, wenn der Sitz (3) bewegt ist um an den Sitz-Rahmen (7) verriegelt zu werden.

## Revendications

1. Motocyclette (1) comprenant :
une paire de cadres de siège (7) s'étendant en un sens avant/arrière et espacés l'un de l'autre d'un intervalle dans un sens de la largeur de la motocyclette ;
une roue arrière (Wr) disposée en-dessous de la paire de cadres de siège (7) dans une vue latérale de la motocyclette ;
une aile arrière (25) comprenant une première partie d'aile (41) disposée au-dessus de la roue arrière (Wr) et une seconde partie d'aile (42) s'étendant vers le bas depuis une partie d'extrémité arrière de la première partie d'aile (41) jusqu'à l'arrière de la roue arrière (Wr), la première partie d'aile (41) étant montée sur la paire de cadres de siège (7) ;
un élément transversal (8) disposé au-dessus de l'aile arrière (25) et couplant la paire de cadres de siège (7) ;
un élément de montage (30) s'étendant depuis l'aile arrière (25) et comprenant une paire de parties de montage de phare (29) qui sont espacées l'une de l'autre d'un intervalle dans le sens de la largeur de la motocyclette, et
un phare arrière rouge (28) disposé au-dessus de l'aile arrière (25) et monté sur la paire de parties de montage de phare (29), **caractérisée en ce que**
ledit élément de montage (30) s'étend plus haut que l'élément transversal (8) et ayant une longueur dans le sens de la largeur de la motocyclette supérieure à une longueur dans un sens avant/arrière de la motocyclette de sorte que l'élément de montage (30) se réoriente facilement dans le sens avant/arrière pour absorber les vibrations du sens avant/arrière transmises depuis l'aile arrière (25) ; et
une longueur de chaque partie de montage de phare (29) dans le sens de la largeur de la motocyclette est supérieure à une longueur de la partie de montage de phare (29) dans le sens avant/arrière de la motocyclette, et
un élément de couplage (31) couple la paire de parties de montage de phare (29) et une longueur de l'élément de couplage (31) dans le sens de la largeur de la motocyclette est supérieure à une longueur de l'élément de couplage (31) dans le sens avant/arrière de la motocyclette, ou
un espace est prévu entre la paire de parties de montage de phare (29) sans élément de couplage (31).

2. Motocyclette (1) selon la revendication 1, **caractérisée en ce que** la première partie d'aile (41) s'étend vers l'arrière et dans le sens vers le haut de la motocyclette, et l'élément de montage (30) s'étend de la première partie d'aile (41) vers une position plus en avant de la motocyclette et plus bas que l'extrémité supérieure de la première partie d'aile (41) et est intégré à la première partie d'aile (41).

3. Motocyclette (1) selon la revendication 1 ou 2, **caractérisée en ce que** l'élément de montage (30) comprend une partie verticale s'étendant dans un sens vertical de la motocyclette.

4. Motocyclette (1) selon l'une quelconque des revendications 1 à 3, **caractérisée en ce qu'**une partie de l'élément de montage (30) sur laquelle le phare arrière rouge (28) est monté est disposée à la même position qu'une partie d'extrémité inférieure de l'élément de montage (30) par rapport au sens avant/arrière de la motocyclette.

5. Motocyclette (1) selon l'une quelconque des revendications 1 à 4, **caractérisée en ce que** l'élément de montage (30) est couplé à l'élément transversal (8).

6. Motocyclette (1) selon la revendication 5, **caractérisée en ce que** le phare arrière rouge (28) est monté sur l'élément de montage (30) à une position supérieure à une position de couplage de l'élément de montage (30) et de l'élément transversal (8).

7. Motocyclette (1) selon l'une quelconque des revendications 1 à 6, **caractérisée en ce que** le phare arrière rouge (28) comprend un arbre de montage de phare (33) inséré dans un trou de montage de phare (29) prévu dans l'élément de montage (30).

8. Motocyclette (1) selon la revendication 7, **caractérisée par** : une rondelle résiliente de butée (35) interposée entre une surface périphérique externe de l'arbre de montage de phare (33) et une surface périphérique interne du trou de montage de phare (29).

9. Motocyclette (1) selon l'une quelconque des revendications 1 à 8, **caractérisée par** : un couvercle arrière (23) comprenant une partie de support (39) supportant le phare arrière rouge (28), le couvercle arrière (23) étant disposé au niveau latéral et au-dessus de la paire de cadres de siège (7).

10. Motocyclette (1) selon la revendication 9, **caractérisée en ce que** la partie de support (39) est disposée plus à l'arrière de la motocyclette que l'élément de montage (30) et plus en hauteur que l'élément de montage (30) et soutient une partie d'extrémité arrière d'une partie supérieure du phare arrière rouge (28).

11. Motocyclette (1) selon l'une quelconque des revendications 1 à 10, **caractérisée en ce qu'**au moins une partie de l'élément de montage (30) est disposée plus vers l'avant de la motocyclette que les extrémités arrière de la paire de cadres de siège (7).

12. Motocyclette (1) selon l'une quelconque des revendications 1 à 11, **caractérisée en ce que** l'aile arrière (25) inclut en outre une troisième partie d'aile (43) s'étendant depuis une partie d'extrémité latérale de la première partie d'aile (41) vers une partie d'extrémité latérale de la seconde partie d'aile (42).

13. Motocyclette (1) selon l'une quelconque des revendications 1 à 12, **caractérisée par** :
un siège (3) capable d'ouverture et de fermeture et étant disposé au-dessus des cadres de siège (7) ; et
un appareil de verrouillage de siège (17) verrouillant le siège (3) aux cadres de siège (7) ;
où l'appareil de verrouillage de siège (17) comprend un élément de verrouillage (18) qui se déplace conjointement au siège (3), et
l'élément de verrouillage (18) passe entre la paire de parties de montage de phare (29) pour chevaucher l'élément de montage (30) en une vue latérale de la motocyclette lorsque le siège (3) est déplacé pour être verrouillé aux cadres de siège (7).
